# EUROPEAN PATENT APPLICATION

(11) **EP 4 700 910 A1**
(43) Date of publication of application: **25.02.2026**
(21) Application number: 24883612.4
(22) Date of filing: 27.11.2024
(51) Int. Cl.: H01M 10/613, H01M 10/6556

(54) **BATTERY PACK, ENERGY STORAGE DEVICE AND ELECTRICAL APPARATUS**

(30) Priority: 09.07.2024 CN 202421609971 U
(71) Applicant: Contemporary Amperex Technology Co., Ltd., Ningde, Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); WANG, Lei, Ningde, Fujian 352100 (CN); ZHENG, Zhimin, Ningde, Fujian 352100 (CN); CHENG, Yong, Ningde, Fujian 352100 (CN)
(74) Representative: Lorenz Seidler Gossel Part. mbB
(86) International application number: PCT/CN2024/135014
(87) International publication number: WO 2026/011658

(57) **Abstract**

Embodiments of the present disclosure provide a battery pack, an energy storage device, and an electrical apparatus, which belong to the field of battery technologies. The battery pack includes a box, a thermal management component, and a battery unit. The thermal management component is mounted in the box. The thermal management component separates the battery unit from a bottom wall of the box. The battery unit includes a battery cell and a frame for mounting the battery cell. The thermal management component is configured to regulate the temperature of the battery cell. The battery cell and the frame are both arranged on the thermal management component.

## Description

### CROSS-REFERENCE TO RELATED APPLICATIONS

The present disclosure is filed based on and claims priority to Chinese Patent Application No. 202421609971.1, entitled "BATTERY PACK, ENERGY STORAGE DEVICE, AND ELECTRICAL APPARATUS" and filed on July 9, 2024, which is incorporated herein by reference in its entirety.

### TECHNICAL FIELD

The present disclosure relates to the field of battery technologies, and in particular, to a battery pack, an energy storage device, and an electrical apparatus.

### BACKGROUND

New-energy batteries are increasingly applied in life and industries. For example, new-energy vehicles equipped with batteries have been widely used. In addition, the batteries are further increasingly applied in the field of energy storage.

In the related art, a battery unit including a battery cell in a box of a battery pack is temperature-regulated by a thermal management component, and the effect of the thermal management component on the temperature regulation of the battery cell needs to be further improved.

### SUMMARY OF THE INVENTION

In view of this, embodiments of the present disclosure are intended to provide a battery pack, an energy storage device, and an electrical apparatus, aiming to improve the temperature regulation effect of the thermal management component on a battery unit.

In order to achieve the above objective, the technical solutions in the embodiments of the present disclosure are implemented as follows:
The embodiments of the present disclosure provide a battery pack, including a box, a thermal management component, and a battery unit. The thermal management component is mounted in the box. The thermal management component separates the battery unit from a bottom wall of the box. The battery unit includes a battery cell and a frame for mounting the battery cell. The thermal management component is configured to regulate the temperature of the battery cell. The battery cell and the frame are both arranged on the thermal management component.

In the embodiment of the present disclosure, the thermal management component separates the battery unit from the bottom wall of the box, that is, there is a certain interval between the battery unit and the bottom wall of the box, which can reduce the impact of the box and an external environment on the battery unit and improve the temperature regulation effect of the thermal management component.

In one embodiment, a distance between the battery unit and the box is greater than zero.

In the embodiment of the present disclosure, there is a certain distance between the battery unit and the box, and the distance is greater than 0. Such an arrangement can reduce the impact of the box and the external environment on the battery unit.

In one embodiment, when projected in an arrangement direction of the battery unit and the thermal management component, a projection region of the battery unit is located within a projection region of the thermal management component.

In the embodiment of the present disclosure, the projection region of the battery unit is located within the projection region of the thermal management component, so that the thermal management component is capable of separating the battery unit and the box as much as possible, thereby reducing the impact of the external ambient temperature on the battery cell through the box, so that the thermal management component is capable of better regulating the temperature of various battery units in the battery pack, thereby improving the temperature regulation effect of the thermal management component on the battery cells.

In one embodiment, the battery pack further includes a connecting element, and the connecting element sequentially passes through the frame, the thermal management component, and the box, so that the connecting element is connected to the box and the frame respectively.

In the embodiment of the present disclosure, the connecting element is connected to the box and the frame respectively, so that the frame, the thermal management component, and the box are capable of being connected together, and the frame arranged on the thermal management component is capable of being mounted more firmly.

In one embodiment, the battery unit spans two opposite ends of the thermal management component in a preset direction, the frame includes two end plates arranged opposite to each other in the preset direction, the battery cell is clamped between the two end plates, and the connecting element sequentially passes through the end plates, the thermal management component, and the box so that the connecting element is respectively connected to the end plates and the box.

In the embodiment of the present disclosure, the connecting element sequentially passes through the end plates, the thermal management component, and the box, so that the end plates, the thermal management component, and the box are capable of being connected together, and the end plates can be mounted more firmly, which is capable of increasing the load-bearing capability of the end plates, so that the end plates are capable of better bearing an expansion force of the battery cell during operation.

In one embodiment, the thermal management component is provided with an avoidance hole for the connecting element to pass through, and the thermal management component is provided with an inlet channel, a temperature-regulating channel, and an outlet channel connected in series in sequence, and the temperature-regulating channel is located between at least two avoidance holes in the preset direction.

In the embodiment of the present disclosure, the temperature-regulating channel is located between at least two avoidance holes in a preset direction, so that a working region of the temperature-regulating channel can cover as large an area as possible, so as to improve the working efficiency of temperature regulation of the battery cell.

In one embodiment, the box has an accommodating cavity and a mounting hole in communication with the accommodating cavity, the battery unit is located in the accommodating cavity, the mounting hole is configured to avoid a temperature-regulating fluid entering and exiting the thermal management component, and the battery pack further includes a flange, a first connecting pipe, a second connecting pipe, and a sealing ring. The flange covers the mounting hole, and the flange is mounted on the box. The first connecting pipe is respectively connected to the flange and the thermal management component to provide the temperature-regulating fluid. The second connecting pipe is respectively connected to the flange and the thermal management component to discharge the temperature-regulating fluid. The sealing ring is in sealing contact with the flange and the box respectively, a space enclosed by the sealing ring spans the first connecting pipe and the second connecting pipe, and the mounting hole is located in the sealing ring.

In the embodiment of the present disclosure, the space enclosed by the sealing ring spans the first connecting pipe and the second connecting pipe, and the mounting hole is located in the sealing ring. In this way, the first connecting pipe and the second connecting pipe are capable of being sealed by the same sealing ring, thereby reducing possible leakage positions on the box and improving the sealing degree and reliability of the box.

In one embodiment, in an arrangement direction of the first connecting pipe and the second connecting pipe, the first connecting pipe and the second connecting pipe are both located on the same side of the box.

In the embodiment of the present disclosure, the first connecting pipe and the second connecting pipe are located on the same side of the box, which can shorten a center distance between the first connecting pipe and the second connecting pipe, reduce the size of the sealing ring in the arrangement direction of the two pipes, improve the reliability of the seal, and reduce the impact of the external environment on the interior of the accommodating cavity.

In one embodiment, the first connecting pipe, the second connecting pipe, and the flange are integrally formed.

In the embodiment of the present disclosure, the first connecting pipe, the second connecting pipe, and the flange are integrally formed, and the flange as well as the flange, the first connecting pipe, and the second connecting pipe have good integrity, thereby improving the sealing reliability between the sealing ring, the flange, and the box.

In one embodiment, an annular groove is formed on one side of the flange facing the mounting hole, a space enclosed by the annular groove spans the first connecting pipe and the second connecting pipe, and the sealing ring is located in the annular groove.

In the embodiment of the present disclosure, the flange has the annular groove on one side facing the mounting hole, and the sealing ring is mounted in the annular groove, which is capable of increasing the connection strength between the sealing ring and the flange and improving the sealing performance of the box.

An energy storage device includes a box, a battery pack, and a charging gun. The battery pack is mounted in the box, and the charging gun is electrically connected to the battery pack.

An electrical apparatus includes an electricity-consuming subject and a battery pack. The battery pack is mounted on the electricity-consuming subject.

In the battery pack, energy storage device, and electrical apparatus in the embodiments of the present disclosure, the distance between the battery unit and the box is greater than zero. This can reduce the impact of the external environment on the battery unit through the box, facilitate the thermal management component to regulate the temperature of the battery unit, and improve the efficiency of the temperature regulation. Such an arrangement can improve the working performance of the battery pack and extend its service life.

### BRIEF DESCRIPTION OF DRAWINGS

FIG. 1 is a sectional view of assembling a battery pack according to an embodiment of the present disclosure;
FIG. 2 is an enlarged view at A in FIG. 1;
FIG. 3 is a schematic view of a thermal management component and a flange, a first connecting pipe, and a second connecting pipe according to an embodiment of the present disclosure;
FIG. 4 is a schematic view of a temperature-regulating channel of a thermal management component according to an embodiment of the present disclosure;
FIG. 5 is an enlarged view at C in FIG. 3;
FIG. 6 is a schematic view of a battery unit according to an embodiment of the present disclosure;
FIG. 7 is a schematic view of a flange, a first connecting pipe, and a second connecting pipe according to an embodiment of the present disclosure;
FIG. 8 is a sectional view at B-B in FIG. 7;
FIG. 9 is a schematic view of a box and a flange according to an embodiment of the present disclosure;
FIG. 10 is an enlarged view at D in FIG. 9; and
FIG. 11 is a schematic view of a battery unit mounted on a thermal management component.

### Description of reference numerals

1. Box; 11. Accommodating cavity; 12. Mounting hole; 13. Bottom wall; 131. Crossbeam; 2. Thermal management component; 21. Avoidance hole; 22. Inlet channel; 23. Outlet channel; 24. Temperature-regulating channel; 3. Battery unit; 31. Battery cell; 32. Frame; 321. End plate; 4. Connecting element; 5. Flange; 51. Annular groove; 6. First connecting pipe; 7. Second connecting pipe; 8. Sealing ring.

### DETAILED DESCRIPTION

It should be noted that in the case of no conflict, the embodiments in the present disclosure and the technical features in the embodiments may be combined with each other. The detailed descriptions in the specific embodiments should be understood as an explanation of the purpose of the present disclosure, and should not be regarded as an improper limitation on the present disclosure.

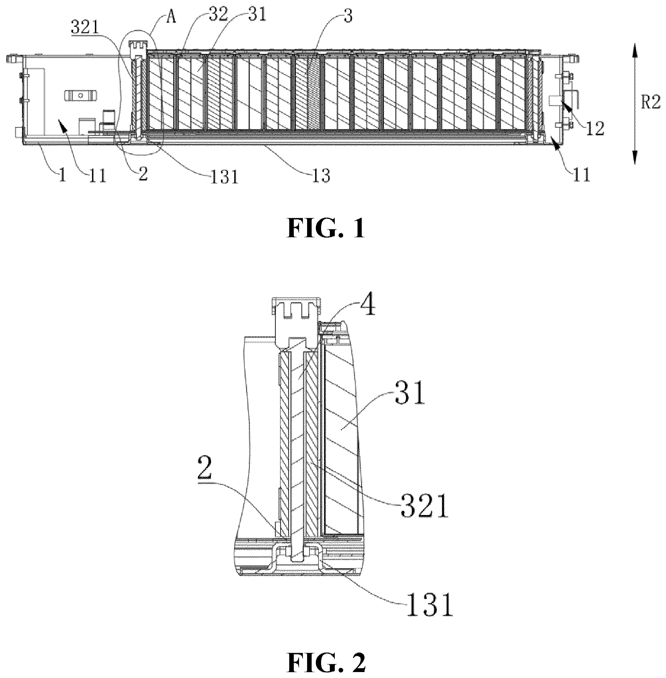

In the description of the embodiments of the present disclosure, orientations or positional relationships indicated by "upper", "lower", "top", and "bottom" are based on orientations or positional relationships shown in the FIG. 2. It should be understood that these orientation terms are intended only to facilitate and simplify the description of the present disclosure, and are not intended to indicate or imply that the apparatus or element referred to must have a particular orientation, or be constructed and operated in a particular orientation, and therefore should not be construed as limitation to the present disclosure.

Unless otherwise defined, all technical and scientific terms used herein have the same meanings as commonly understood by those skilled in the art in the present disclosure. The terms used herein are intended only for the purpose of describing specific embodiments and are not intended to limit the present disclosure. The terms "including" and "having" and any variants thereof in the embodiments of the present disclosure are intended to cover non-exclusive inclusion.

In the description of the embodiments of the present disclosure, the technical terms "first", "second", "third", and the like are only used for distinguishing different objects, and cannot be understood as indicating or implying a relative importance or implicitly specifying the quantity, particular order, or primary and secondary relation of the technical features indicated. In the description of the embodiments of the present disclosure, "a plurality of' means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that three relationships may exist. For example, A and/or B may indicate three situations: A exists alone, both A and B exist, and B exists alone. In addition, the character "/" herein generally means that the associated objects before and after it are in an "or" relationship.

In the description of the embodiments of the present disclosure, unless otherwise explicitly specified and defined, the technical terms such as "mount", "connect", "connection", and "fix" should be understood in a broad sense. For example, the connection may be a fixed connection, a detachable connection, or an integrated connection, may be a mechanical connection or an electrical connection, or may be a direct connection, an indirect connection through an intermediate, an internal communication between two elements, or an interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be a direct contact, or a contact through an intermediate layer, or a contact between two objects that have little or no interaction force, or a contact between two objects that have an interaction force.

In the related art, a battery unit in a box of a battery pack includes a battery cell and a frame for mounting the battery cell. The frame of the battery unit is connected to the box, and the frame is in contact with a bottom wall of the box. The frame of the battery unit itself has a certain thermal conductivity. The external ambient temperature may be conducted, through the battery pack and the box, to the frame in contact with the box, and then conducted to the battery cell, thereby affecting temperature regulation of the battery cell by the thermal management component, resulting in a poor temperature regulation effect of the thermal management component on the battery cell.

In the embodiments of the present disclosure, by arranging a thermal management component between a bottom wall of a box and a battery unit, and separating the bottom wall from the battery unit by using the thermal management component, so that a distance between the bottom wall of the thermal management component and the battery unit is greater than zero, thereby reducing the influence of an external environment on temperature regulation of the battery cell through the box, and improving a temperature regulation effect of the thermal management component on the battery cell.

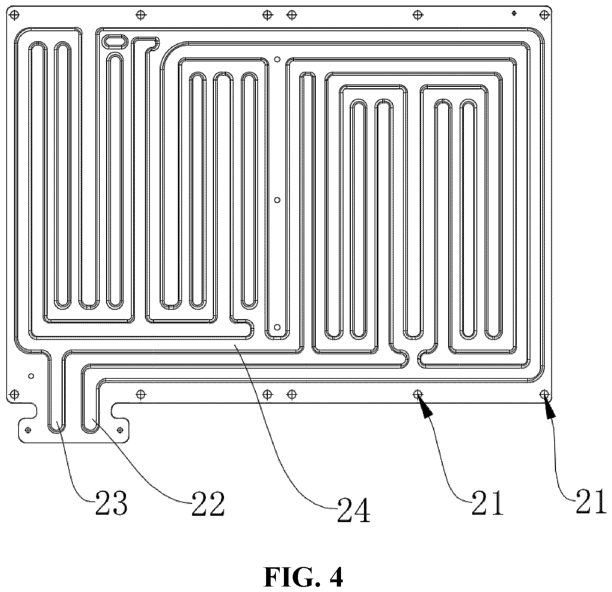

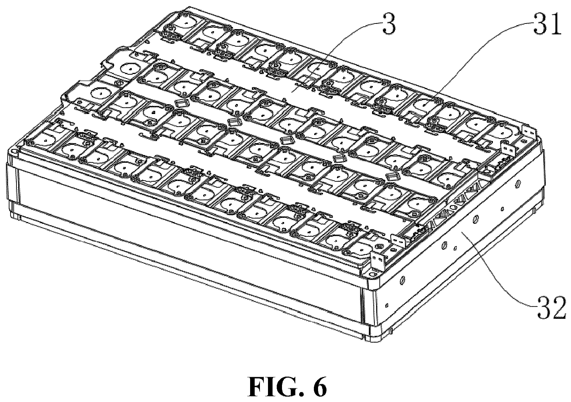

The embodiments of the present disclosure provide a battery pack, referring to FIG. 1 to FIG. 8, including a box 1, a thermal management component 2, and a battery unit 3. The thermal management component 2 is mounted in the box 1. The thermal management component 2 separates the battery unit 3 from a bottom wall 13 of the box. The battery unit 3 includes a battery cell 31 and a frame 32 for mounting the battery cell 31. The thermal management component 2 is configured to regulate the temperature of the battery cell 31. The battery cell 31 and the frame 32 are both arranged on the thermal management component 2.

It should be explained that the thermal management component 2 separates the battery unit 3 from the bottom wall 13 of the box, the battery unit 3 is out of contact with the bottom wall 13 of the box, and the distance between the battery unit 3 and the bottom wall 13 is greater than 0.

For example, the battery unit 3 may be a battery module.

For example, the battery pack adopts a module-free structure, and the battery cells 31 of the battery unit 3 in the box are connected in series and/or in parallel to form an entirety and the entirety is placed in the box.

The thermal management component 2 is a structure for regulating the temperature of the battery unit by allowing a temperature-regulating fluid to flow in a flow channel within the thermal management component.

For example, the thermal management component 2 is a water cooling plate.

In the embodiment of the present disclosure, the battery cell 31 may be a secondary battery. The secondary battery refers to a battery cell that can be charged to activate an active material and continue to be used after the battery cell is discharged.

In the embodiments of the present disclosure, the battery cell 31 may be a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead accumulator, and the like, which is not limited in the embodiments of the present disclosure.

For example, the battery cell 31 includes a shell and an electrode assembly, and the electrode assembly is arranged within the shell.

In some embodiments, the shell may be a sealed structure or a non-sealed structure. As an example, when the shell is a non-sealed structure, the shell plays a role in protecting the electrode assembly, a sealing bag is further included between the shell and the electrode assembly, and the sealing bag is configured to encapsulate the electrode assembly and an electrolyte. Specifically, the sealing bag may be a bag-shaped insulating member or an aluminum-plastic film.

The electrode assembly include a positive electrode plate, a negative electrode plate, and a separator located between the positive electrode plate and the negative electrode plate.

For example, the electrode assembly may be wound or laminated.

For example, referring to FIG. 1 and FIG. 2, a crossbeam 131 is formed on the bottom wall 13 of the box, the crossbeam 131 is in contact with the thermal management component 2, the thermal management component 2 is in contact with the battery unit 3, and the bottom wall 13 is spaced apart from the battery unit 3.

In the embodiments of the present disclosure, the thermal management component 2 separates the battery unit 3 from the bottom wall 13 of the box, that is, the battery unit 3 is out of contact with the bottom wall 13 of the box, a distance between the battery unit 3 and the bottom wall 13 is greater than 0, which can reduce the impact of the box 1 and an external environment on the battery cell 31 and improve the temperature regulation effect of the thermal management component 2.

In one embodiment, referring to FIG. 1 to FIG. 2, the distance between the battery unit 3 and the box 1 is greater than zero.

For example, there is a certain distance greater than zero between the battery unit 3 and the bottom wall 13 of the box 1, and there is also a certain distance greater than zero between the battery unit and other parts of the box 1.

In the embodiment of the present disclosure, the distance between the battery unit 3 and the box 1 is greater than zero, that is, there is a certain distance between the battery unit and the box, and the distance is greater than 0. Such an arrangement can reduce the impact of the box and the external environment on the battery unit.

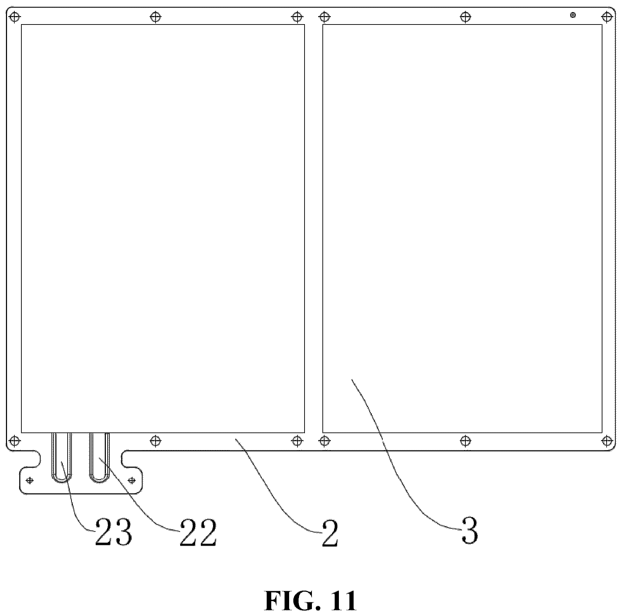

In one embodiment, referring to FIG. 1 to FIG. 11, when projected in an arrangement direction of the battery unit 3 and the thermal management component 2, a projection region of the battery unit 3 is located within a projection region of the thermal management component 2.

For example, the arrangement direction of the battery unit 3 and the thermal management components 2 is projected as a direction indicated by an arrow R2 in FIG. 1.

In the embodiment of the present disclosure, the projection region of the battery unit 3 is located within the projection region of the thermal management component 2, so that the thermal management component 2 is capable of separating the battery unit 3 and the box 1 as much as possible, thereby reducing the impact of the external ambient temperature on the battery cell 31 through the box 1, so that the thermal management component 2 is capable of better regulating the temperature of various battery units 3 in the battery pack, thereby improving the temperature regulation effect of the thermal management component 2 on the battery cells 31.

It should be understood that the relationship between the battery unit 3 and the thermal management component 2 is not limited to the one described above. For example, the projection region of the battery unit 3 may also be partially located outside the projection region of the thermal management component 2, that is, the battery unit 3 that is not in contact with the box 1 is partially suspended from the thermal management component 2.

In one embodiment, referring to FIG. 2, the battery pack further includes a connecting element 4, and the connecting element 4 sequentially passes through the frame 32, the thermal management component 2, and the box 1, so that the connecting element 4 is connected to the box 1 and the frame 32 respectively.

For example, the connection is detachable via the connecting element 4.

For example, the connecting element 4 is a bolt.

For example, the box 1 and the frame 32 are riveted.

In the embodiment of the present disclosure, referring to FIG. 1, the connecting element 4 is connected to the box 1 and the frame 32 respectively, so that the frame 32, the thermal management component 2, and the box 1 are capable of being connected together, and the frame arranged on the thermal management component is capable of being mounted more firmly.

For example, the box 1 is connected to the frame 32 and the thermal management component 2 by welding.

For example, part of the connecting element 4 connects the thermal management component 2 and the box 1, and part of the connecting element 4 connects the thermal management component 2 and the frame 32.

In one embodiment, referring to FIG. 1 to FIG. 3, the battery unit 3 spans two opposite ends of the thermal management component 2 in a preset direction, the frame 32 includes two end plates 321 arranged opposite to each other in the preset direction, the battery cell 31 is clamped between the two end plates 321, and the connecting element 4 sequentially passes through the end plates 321, the thermal management component 2, and the box 1 so that the connecting element 4 is respectively connected to the end plates 321 and the box 1.

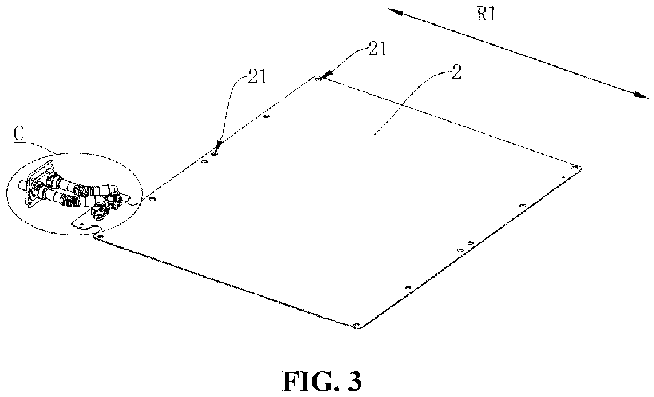

Referring to FIG. 3, the preset direction is a direction shown by R1 in FIG. 3. One of the end plates 321 is arranged at one end of the thermal management component 2 in the preset direction, and the other end plate 321 is arranged at the other end of the thermal management component 2 in the preset direction.

For example, the battery cell 31 is square in shape, and the preset direction is perpendicular to a surface of the battery cell 31 having the largest area.

For example, the material of the end plate 321 is metal.

For example, two end plates 321 are arranged at two opposite ends of the thermal management component 2 in the preset direction, the battery cells 31 are arranged in a region between the two end plates 321, and the end plates 321, the thermal management component 2, and the box 1 are connected by bolts.

In the embodiment of the present disclosure, the connecting element 4 sequentially passes through the end plates 321, the thermal management component 2, and the box 1, so that the end plates 321, the thermal management component 2, and the box 1 are capable of being connected together, and the end plates 321 can be mounted more firmly, which is capable of increasing the load-bearing capability of the end plates 321, so that the end plates 321 are capable of better bearing an expansion force of the battery cell 31 during operation.

In one embodiment, referring to FIG. 1 to FIG. 4, the thermal management component 2 is provided with an avoidance hole 21 for the connecting element 4 to pass through, and the thermal management component 2 is provided with an inlet channel 22, a temperature-regulating channel 24, and an outlet channel 23 connected in series in sequence, and the temperature-regulating channel 24 is located between at least two avoidance holes 21 in the preset direction.

For example, the inlet channel 22 and the outlet channel 23 are located outside a range enclosed by the avoidance holes 21 at both ends of the thermal management component 2 in the preset direction, and the temperature-regulating channel 24 is located within the range enclosed by the avoidance holes 21 at both ends of the thermal management component 2 in the preset direction.

In the embodiment of the present disclosure, the temperature-regulating channel 24 is located between at least two avoidance holes 21 in a preset direction, so that a working region of the temperature-regulating channel 24 can cover as large an area as possible, so as to improve the working efficiency of temperature regulation of the battery cell 31.

It is understandable that the arrangement of the inlet channel 22, the outlet channel 23, and the temperature-regulating channel 24 is not limited to the above situation. For example, the temperature-regulating channel 24 can be partially located outside the range enclosed by the avoidance holes 21 at both ends in the preset direction.

In one embodiment, referring to FIG. 1 to FIG. 5 and FIG. 9 and FIG. 10, the box 1 has an accommodating cavity 11 and a mounting hole 12 in communication with the accommodating cavity 11, the battery unit 3 is located in the accommodating cavity 11, the mounting hole 12 is configured to avoid a temperature-regulating fluid entering and exiting the thermal management component 2, and the battery pack further includes a flange 5, a first connecting pipe 6, a second connecting pipe 7, and a sealing ring 8. The flange 5 covers the mounting hole 12, and the flange 5 is mounted on the box 1. The first connecting pipe 6 is respectively connected to the flange 5 and the thermal management component 2 to provide the temperature-regulating fluid. The second connecting pipe 7 is respectively connected to the flange 5 and the thermal management component 2 to discharge the temperature-regulating fluid. The sealing ring 8 is in sealing contact with the flange 5 and the box 1 respectively, a space enclosed by the sealing ring 8 spans the first connecting pipe 6 and the second connecting pipe 7, and the mounting hole 12 is located in the sealing ring 8.

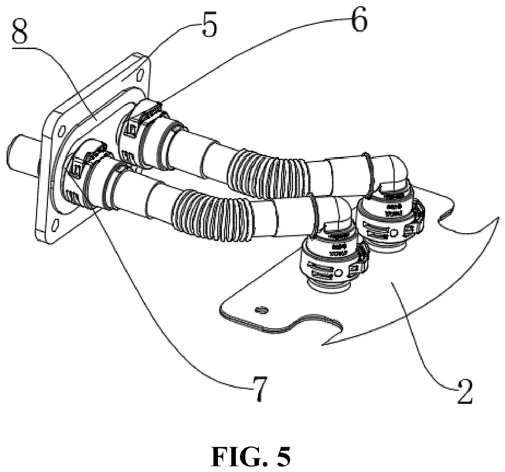

For example, referring to FIG. 5, there is one sealing ring, and one sealing ring is sleeved on the first connecting pipe and the second connecting pipe, so that the first connecting pipe and the second connecting pipe are sealed by the one sealing ring.

For example, there are at least two sealing rings, and a space enclosed by each sealing ring spans the first connecting pipe and the second connecting pipe, so that each sealing ring is capable of sealing the first connecting pipe and the second connecting pipe. For each sealing ring, the first connecting pipe and the second connecting pipe are both sealed by the same sealing ring.

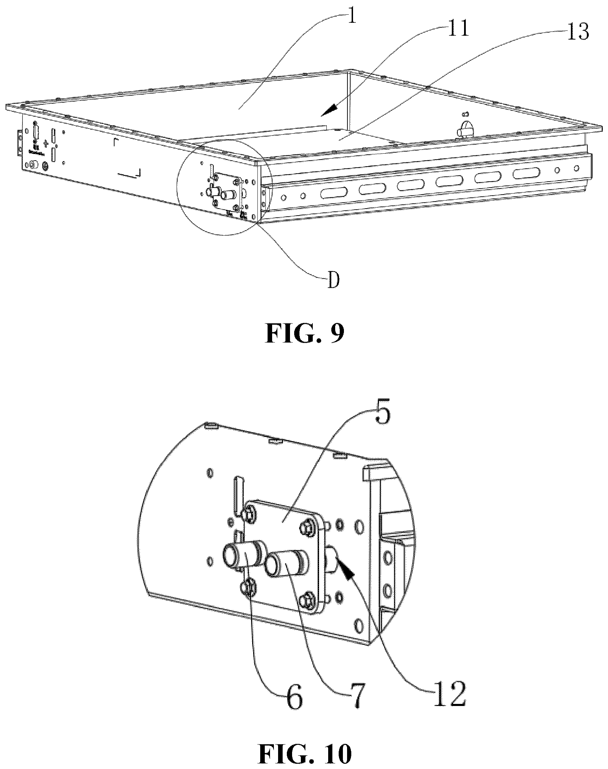

For example, referring to FIG. 10, the first connecting pipe passes through one of the mounting holes, and the second connecting pipe passes through the other mounting hole.

In the embodiment of the present disclosure, the space enclosed by the sealing ring 8 spans the first connecting pipe 6 and the second connecting pipe 7, and the mounting hole 12 is located in the sealing ring 8. In this way, the first connecting pipe 6 and the second connecting pipe 7 are capable of being sealed by the same sealing ring, thereby reducing possible leakage positions on the box and improving the sealing degree and reliability of the box 1.

It is understandable that the arrangement of the first connecting pipe 6, the second connecting pipe 7, and the sealing ring 8 is not limited to the above situation. For example, the number of sealing rings 8 can be two, the number of mounting holes 12 is two, the first connecting pipe 6 passes through one of the sealing rings 8, and the second connecting pipe 7 passes through the other sealing ring 8. The mounting hole 12 corresponding to the first connecting pipe 6 is sealed with the box 1 and the flange 5 respectively through the corresponding sealing ring 8, and the mounting hole 12 corresponding to the second connecting pipe 7 is sealed with the box 1 and the flange 5 respectively through the corresponding sealing ring 8.

In one embodiment, referring to FIG. 1 to FIG. 8, in an arrangement direction of the first connecting pipe 6 and the second connecting pipe 7, the first connecting pipe 6 and the second connecting pipe 7 are both located on the same side of the box 1.

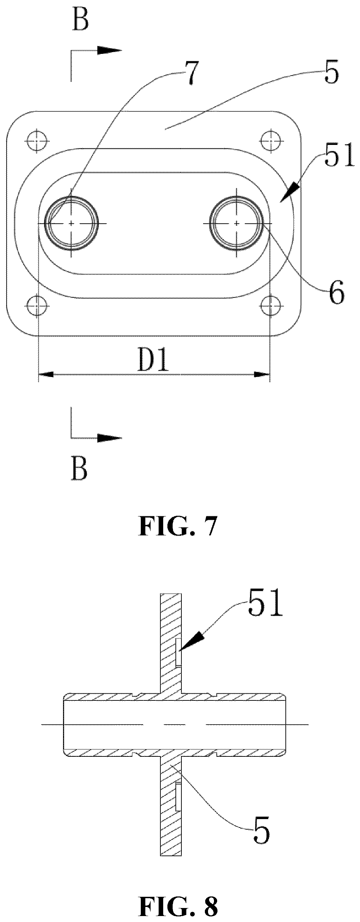

For example, referring to FIG. 7, a span of the space enclosed by the sealing ring 8 in the arrangement direction of the first connecting pipe 6 and the second connecting pipe 7 is 60 mm to 80 mm.

For example, referring to FIG. 7, the span of the space enclosed by the sealing ring in the arrangement direction of the first connecting pipe and the second connecting pipe is D1, and 60 mm≤D1≤80 mm.

For example, D1 may be 60 mm, 65 mm, 75 mm, or 80 mm.

In the embodiment of the present disclosure, the first connecting pipe 6 and the second connecting pipe 7 are located on the same side of the box 1, which can shorten a center distance between the first connecting pipe 6 and the second connecting pipe 7, reduce the size of the sealing ring 8 in the arrangement direction of the two pipes, improve the reliability of the seal, and reduce the impact of the external environment on the interior of the accommodating cavity 11.

It should be explained that the arrangement of the first connecting pipe 6 and the second connecting pipe 7 is not limited to the above situation. For example, in the arrangement direction of the first connecting pipe 6 and the second connecting pipe 7, the first connecting pipe 6 and the second connecting pipe 7 are respectively located on opposite sides of the box 1.

In one embodiment, referring to FIG. 7 and FIG. 8, the first connecting pipe 6, the second connecting pipe 7, and the flange 5 are integrally formed.

In the embodiment of the present disclosure, the first connecting pipe 6, the second connecting pipe 7, and the flange 5 are integrally formed, and the flange 5 as well as the flange 5, the first connecting pipe 6, and the second connecting pipe 7 have good integrity, thereby improving the sealing reliability between the sealing ring 8, the flange 5, and the box 1.

It should be explained that the connection method between the first connecting pipe 6, the second connecting pipe 7, and the flange 5 is not limited to integral forming. For example, the first connecting pipe 6, the second connecting pipe 7, and the flange 5 may also be welded.

In one embodiment, referring to FIG. 7 and FIG. 8, an annular groove 51 is formed on one side of the flange 5 facing the mounting hole 12, a space enclosed by the annular groove 51 spans the first connecting pipe 6 and the second connecting pipe 7, and the sealing ring 8 is located in the annular groove 51.

For example, referring to FIG. 7, a space enclosed by the annular groove 51 for accommodating the first connecting pipe 6 and the second connecting pipe 7 is in the shape of an elongated strip.

In the embodiment of the present disclosure, the flange 5 has the annular groove 51 on one side facing the mounting hole 12, and the sealing ring 8 is mounted in the annular groove 51, which is capable of increasing the connection strength between the sealing ring 8 and the flange 5 and improving the sealing performance of the box 1.

The sealing ring groove may not be provided, one side of the flange facing the mounting hole 12 is a plane, and the sealing ring is on the plane.

An energy storage device includes a box 1, a battery pack, and a charging gun. The battery pack is mounted in the box 1, and the charging gun is electrically connected to the battery pack.

An electrical apparatus includes an electricity-consuming subject and a battery pack. The battery pack is mounted on the electricity-consuming subject.

The above descriptions are merely preferred embodiments of the present disclosure, and are not intended to limit the present disclosure. For persons skilled in the art, the present disclosure may have various modifications and variations. Any modification, equivalent replacement, improvement or the like made without departing from the spirit and principle of the present disclosure should fall within the scope of claims of the present disclosure.

## Claims

1. A battery pack, comprising:
a box;
a thermal management component mounted in the box;
a battery unit, wherein the thermal management component separates the battery unit from a bottom wall of the box, the battery unit comprises a battery cell and a frame for mounting the battery cell, the thermal management component is configured to regulate the temperature of the battery cell, and the battery cell and the frame are both arranged on the thermal management component; and
a connecting element, wherein the connecting element sequentially passes through the frame, the thermal management component, and the box, so that the connecting element is connected to the box and the frame respectively.

2. The battery pack according to claim 1, wherein a distance between the battery unit and the box is greater than zero.

3. The battery pack according to claim 1 or 2, wherein when projected in an arrangement direction of the battery unit and the thermal management component, a projection region of the battery unit is located within a projection region of the thermal management component.

4. The battery pack according to any one of claims 1 to 3, wherein the battery unit spans two opposite ends of the thermal management component in a preset direction, the frame comprises two end plates arranged opposite to each other in the preset direction, the battery cell is clamped between the two end plates, and the connecting element sequentially passes through the end plates , the thermal management component, and the box so that the connecting element is respectively connected to the end plates and the box.

5. The battery pack according to claim 4, wherein the thermal management component is provided with an avoidance hole for the connecting element to pass through, the thermal management component is provided with an inlet channel, a temperature-regulating channel and an outlet channel connected in series in sequence, and the temperature-regulating channel is located between at least two avoidance holes in the preset direction.

6. The battery pack according to any one of claims 1 to 5, wherein the box has an accommodating cavity and a mounting hole in communication with the accommodating cavity, the battery unit is located in the accommodating cavity, the mounting hole is configured to avoid a temperature-regulating fluid entering and exiting the thermal management component, and the battery pack further comprises:
a flange covering the mounting hole, wherein the flange is mounted on the box;
a first connecting pipe respectively connected to the flange and the thermal management component to provide the temperature-regulating fluid;
a second connecting pipe respectively connected to the flange and the thermal management component to discharge the temperature-regulating fluid; and
a sealing ring in sealing contact with the flange and the box respectively, wherein a space enclosed by the sealing ring spans the first connecting pipe and the second connecting pipe, and the mounting hole is located in the sealing ring.

7. The battery pack according to claim 6, wherein in an arrangement direction of the first connecting pipe and the second connecting pipe, the first connecting pipe and the second connecting pipe are both located on the same side of the box.

8. The battery pack according to claim 6 or 7, wherein the first connecting pipe, the second connecting pipe, and the flange are integrally formed.

9. The battery pack according to any one of claims 6 to 8, wherein an annular groove is formed on one side of the flange facing the mounting hole, a space enclosed by the annular groove spans the first connecting pipe and the second connecting pipe, and the sealing ring is located in the annular groove.

10. An energy storage device, comprising:
a box;
the battery pack according to any one of claims 1 to 9, wherein the battery pack is mounted on the box; and
a charging gun electrically connected to the battery pack.

11. An electrical apparatus, comprising:
an electricity-consuming subject; and
the battery pack according to any one of claims 1 to 9, wherein the battery pack is mounted on the electricity-consuming subject.
